# FASCICULE DE BREVET EUROPEEN

(11) **EP 1 930 606 B1**
(45) Date de publication et mention de la délivrance du brevet: **02.09.2009**
(21) Numéro de dépôt: 06291889.1
(22) Date de dépôt: 07.12.2006
(51) Int. Cl.: F16B 5/06

(54) **Système d'assemblage de deux pièces à l'aide d'un dispositif à agrafe et organe d'assemblage**
System zur Verbindung zweier Teile mittels einer Klammervorrichtung und einem Verbindungselement
System for assembling two parts with the help of a device with a hook and an assembly element

(43) Date de publication de la demande: 11.06.2008
(73) Titulaire: Lisi Automotive Rapid, 95650 Puiseux Pontoise (FR)
(72) Inventeur: Viennois, Fabien, 92800 Puteaux (FR)
(74) Mandataire: Thinat, Michel

(56) Documents cités:
- US-A- 2 334 681
- US-A- 2 798 277
- US-A- 4 438 552

## Description

L'invention concerne un système d'assemblage de deux pièces, du type comprenant un organe d'assemblage des deux pièces à l'état assemblé, rotatif entre une position de déverrouillage et une position de verrouillage et comportant une partie de tête, une partie de fût et une partie de pied pourvue de moyens de verrouillage, un élément en forme d'une agrafe présentant la forme d'un U ayant deux branches reliées par une partie de base, élastiquement écartables l'une de l'autre et pourvu de découpes permettant le passage dudit pied, l'organe d'assemblage et l'agrafe étant susceptibles d'être pré-assemblés et l'ensemble pré-assemblé étant monté sur le bord d'une des deux pièces par engagement du bord entre les deux branches de l'agrafe et la deuxième pièce comportant un évidemment permettant le passage du pied dans la position de déverrouillage de l'organe d'assemblage, mais empêchant le retrait de la seconde pièce lorsque l'organe d' assemblage occupe sa position de verrouillage.

Les dispositifs d'assemblage de ce type, qui sont connus, présentent l'inconvénient majeur que l'ensemble formé par l'organe d'assemblage et l'agrafe sont d'un prix de fabrication relativement élevé, ce qui est un handicap considérable dans la mesure où il s'agit de pièces à fabriquer en série. Plus précisément, c'est l'organe d'assemblage qui occasionne le prix élevé dans la mesure où cette pièce, après avoir été forgée, doit encore être soumise à des opérations d'usinage.

L'invention a pour but de palier cet inconvénient.

Pour atteindre ce but, le dispositif d'assemblage selon l'invention est caractérisé en ce que le pied de l'organe d'assemblage présente la forme d'une came et le verrouillage se fait par rotation de l'organe d'un angle de l'ordre de 90°.

De plus, un système d'assemblage du même type que le système selon l'invention est connu du document US 2,798,277 A.

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant, deux modes de réalisation de l'invention et dans lequel.
- les figures 1 à 4 sont des vues en perspective d'un dispositif d'assemblage de deux pièces plates, selon un premier mode de réalisation de l'invention, et illustrent quatre étapes successives du processus d'assemblage des deux pièces ;
- les figures 5 et 6 sont des vues en perspective d'un second mode de réalisation du dispositif d'assemblage selon l'invention, en illustrant deux étapes successives du processus d'assemblage ;
- la figure 7 est une vue en perspective du second mode de réalisation du dispositif d'assemblage selon l'invention et montre ce dispositif à l'état pré-assemblé ;
- la figure 8 est une autre vue en perspective du dispositif dans la figure 7 ;
- la figure 9 est une vue de dessus du dispositif d'assemblage selon la figure 7 ;
- la figure 10 est une vue latérale du dispositif d'assemblage selon la figure 7, en direction de la flèche X ;
- la figure 11 est une vue en coupe selon la ligne XI-XI de la figure 10 ;
- la figure 12 est une vue latérale en direction de la flèche 12 de la figure 10 ;
- la figure 13 est une vue de dessous du dispositif d'assemblage en direction de la flèche 13 de la figure 10 ;
- les figures 14 et 15 sont des vues en perspective du premier mode de réalisation du dispositif d'assemblage selon l'invention et représenté aux figures 1 à 4 ;
- la figure 16 est une vue du dessus de la figure 14 ;
- la figure 17 est une vue latérale du dispositif d'assemblage de la figure 14, en direction de la flèche XVII ;
- la figure 18 est une vue en coupe le long de la ligne XVIII-XVIII, de la figure 17 ;
- la figure 19 est une vue latérale en direction de la flèche XIX de la figure 14 ; et,
- la figure 20 est une vue de dessous du dispositif selon la figure 14.

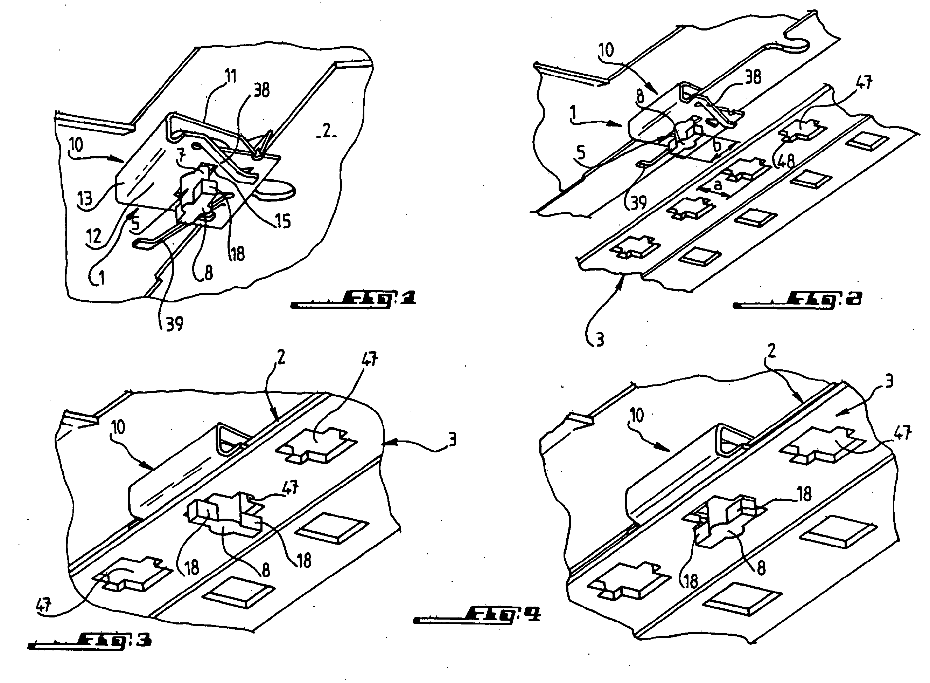

En se reportant tout d'abord aux figures 1 à 6, on constate que le dispositif d'assemblage selon l'invention, désigné par la référence générale 1, est destiné à l'assemblage de deux pièces plates respectivement 2 et 3, 2 étant le bord en tôle d'une pièce telle qu'une armoire électrique et 3 étant un profilé.

Le dispositif d'assemblage 1 comprend essentiellement un organe d'assemblage 5 comportant une partie de tête 6, une partie de fût 7 et une partie formant pied 8, et une agrafe 10 en forme de U qui comporte deux branches 11, 12, élastiquement écartables l'une de l'autre et une partie de base 13 qui relie les deux branches.

Dans la branche inférieure 12 est pratiquée une découpe 15 de passage du pied 8 de l'organe d'assemblage. La forme de cette découpe est complémentaire à la forme du pied. La branche supérieure 11 présente un évidement 16 de forme complémentaire à la forme de la tête 6 pour permettre la réception de celle-ci. L'organe d'assemblage 1 est rotatif dans les évidements 15 et 16 des deux branches 11 et 12 de l'agrafe 10 et son pied 8 présente la forme d'une came.

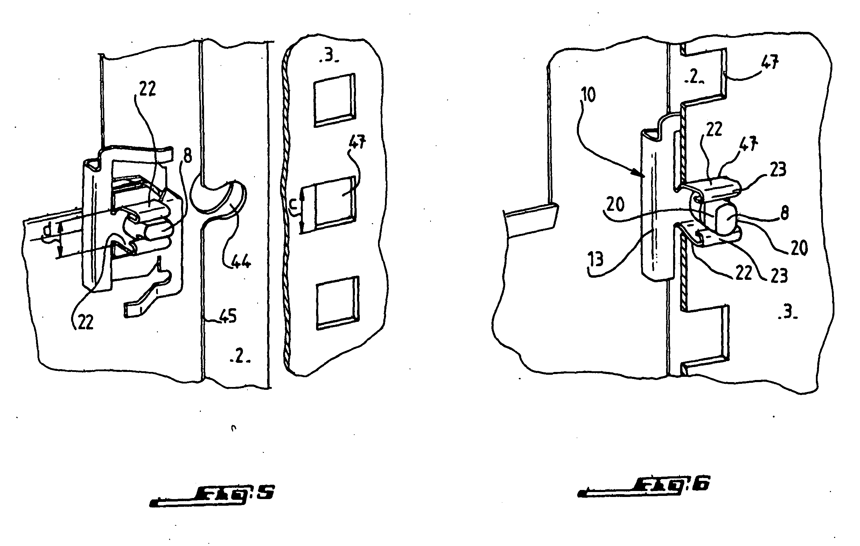

Les figures 1 à 4 concernent un premier mode de réalisation du dispositif d'assemblage selon l'invention et les figures 5 et 6 sont relatives à un deuxième mode de réalisation de ce dispositif d'assemblage 1.

Dans le cas du premier mode de réalisation, le pied comporte deux extensions 18 qui s'étendent radialement à partir du fût 7 et sont diamétralement opposées. Ces extensions ont une section transversale rectangulaire.

La découpe 15 de la branche inférieure 12 de l'agrafe 10 est donc de forme allongée appropriée, comportant une partie médiane circulaire d'un diamètre légèrement supérieur au diamètre du fût circulaire et deux extensions radiales diamétralement opposées. Les dimensions de ces extensions sont légèrement supérieures aux dimensions des excroissances radiales 18 de l'organe d'assemblage 5.

Dans le cas du second mode de réalisation selon les figures 5 et 6, la découpe 15 dans la branche inférieure 12 de l'agrafe 10 présente une forme circulaire dont le diamètre est légèrement supérieur au diamètre du fût, pour permettre la rotation de celui-ci dans cette découpe.

Le pied noté maintenant 8' est usiné de façon à présenter la forme d'une came en réalisant des méplats 20 aux deux faces diamétralement opposées, qui sont orientés perpendiculairement à la direction longitudinale de la base 13 de l'agrafe, avant la rotation de l'organe d'assemblage.

Ces méplats 20 coopèrent chacun avec une languette élastique 22. Ces languettes, de forme rectangulaire, s'étendent perpendiculairement vers le bas à partir de la face extérieure de la branche inférieure 12 de l'agrafe 10 et tangentiellement de la découpe 15. Elle sont parallèles et perpendiculaires à la base 13. Les extrémités libres 23 des languettes sont recourbées pour venir en contact avec les méplats 20 du pied en forme de came 8'.

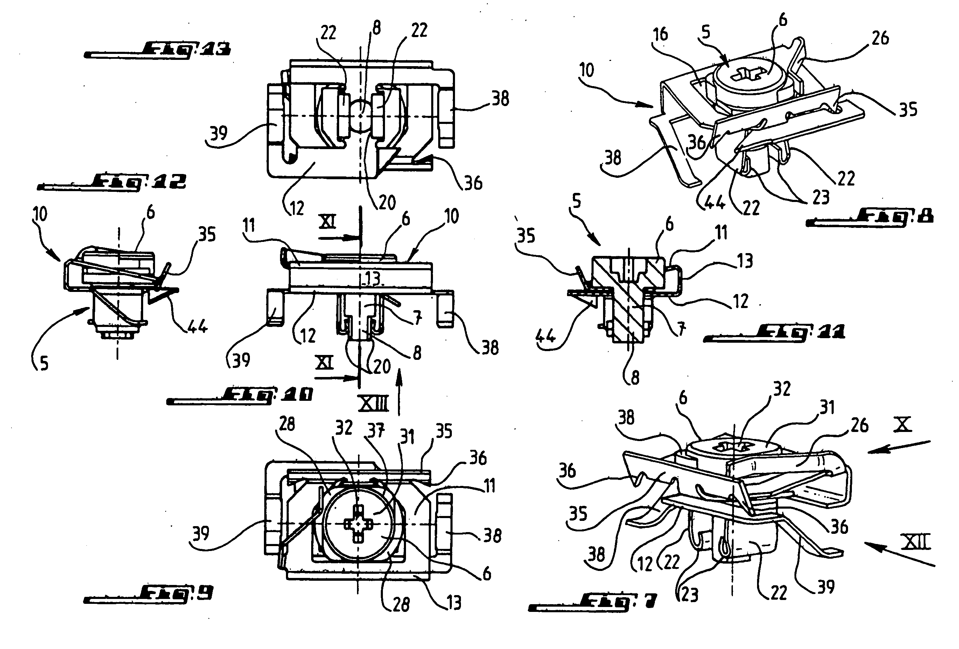

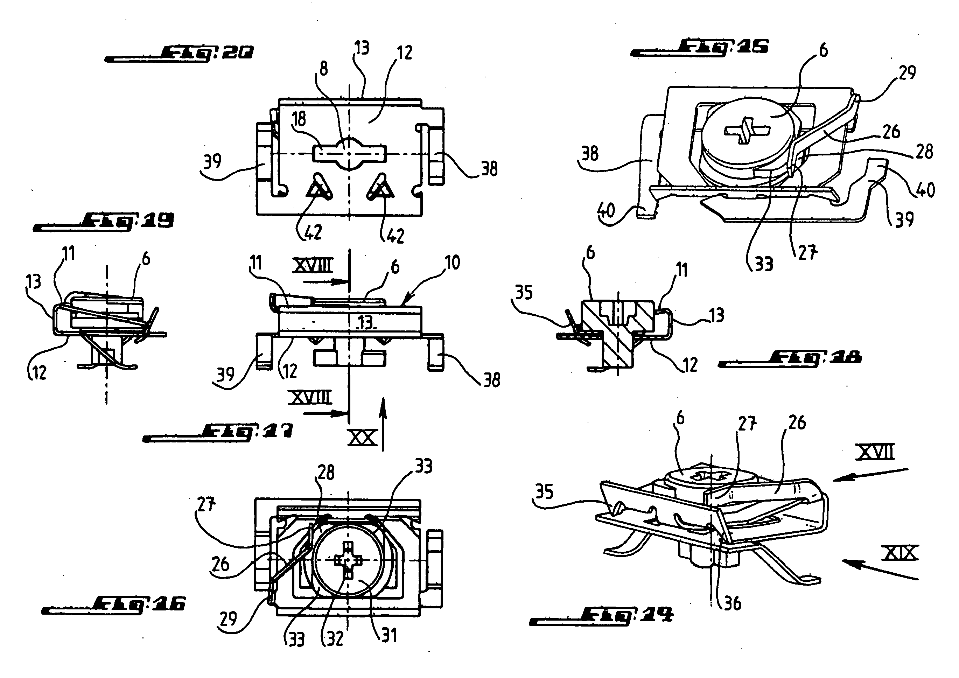

L'organe d'assemblage 5 et l'agrafe 10 peuvent être pré-assemblés après insertion de l'organe 5 dans l'agrafe 10 comme le montrent clairement, pour le premier mode de réalisation notamment, les figures 7 et 9, et pour le second mode de réalisation, les figures 14 et 16.

Pour éviter que l'organe d'assemblage, après son insertion, puisse se dégager accidentellement de l'agrafe, la branche supérieure 11 de celle-ci comporte un bras de retenue 26 dont l'extrémité libre 27 prend appui sur une face d'appui 28 de la tête 6 de l'organe 5, qui s'étend perpendiculairement à l'axe de ce dernier. L'autre extrémité 29 du bras 26 est solidaire de la branche supérieure 11 au niveau de la base 1. Le bras s'étend sensiblement parallèlement à la face de cette branche.

Comme le montre les figures, le bras 26 est découpé de la branche 11 sauf à rester solidaire de celle-ci au niveau de son extrémité 29. Puis la languette ainsi découpée est recourbée de façon à ce que la languette formant le bras 26 s'étende maintenant perpendiculairement à la face de la branche. Ensuite la languette est recourbée une première fois pour s'étendre obliquement en direction de la face d'appui 28 de la tête 6 et son extrémité 27 est recourbée pour qu'elle puisse venir en contact avec la face d'appui 28. L'extrémité 27 est ainsi élastiquement déplaçable de sa position d'appui clairement visible sur la figure 16, latéralement.

La tête 6 de l'organe d'assemblage 5 comporte, diamétralement opposée à la face d'appui du bras 26 une deuxième face d'appui 28. Les deux faces 28 sont disposées à une certaine distance en dessous de la face supérieure sensiblement plane 31 de la tête, qui comporte une empreinte d'actionnement en forme de croix 32.

La face extérieure cylindrique de la tête 6 au-dessus des faces d'appui 28 comporte deux excroissances radiales 33 diamétralement opposées, dont chacune est décalée angulairement d'une des deux faces d'appui 28 de façon que l'angle entre le point d'appui de l'extrémité 27 du bras 28 sur la face 28 et la ligne radiale passant par le centre de l'excroissance 32 forme un angle de l'ordre de 90°. Les faces extérieures 34 des excroissances 33 sont perpendiculaires l'une à l'autre de façon que, dans la position angulaire de déverrouillage et d'insertion de l'organe d'assemblage 5 dans l'agrafe 10 les excroissances constituent des butées en contact avec la découpe 14 dans la branche supérieure 11 et, dans la position de verrouillage, et, après rotation de 90°, des butées de limitation du mouvement de rotation à un angle de 90° en venant en contact avec le bord opposé de la découpe 14.

Les figures 8 et 15 montrent la tête dans la position de verrouillage de l'organe d'assemblage 5 dans l'agrafe 10. On constate que l'extrémité de contact 27 du bras élastique 26 est en appui contre la face périphérique 38 d'une excroissance 33.

Il est encore à noter que la branche supérieure 11 de l'agrafe est recourbée au niveau de son extrémité avant libre pour former un bord incliné vers le haut 35 dont les extrémités sont configurées chacune pour former une dent 36 susceptible de percer une couche électriquement isolante, telle qu'une couche de peinture, sur le bord 2 de la première pièce pour assurer un contact électrique entre l'agrafe et ce bord.

On constate encore que la branche inférieure est pourvue de deux languettes élastiques 38, 39, obtenues par découpe dans la branche inférieure 12, chacune à une extrémité latérale de la branche et repliées hors du plan de celle-ci pour s'étendre obliquement vers le bas en direction de la seconde pièce à monter sur l'agrafe. Plus précisément, chaque languette 38, 39, est recourbée une première fois pour sortir du plan de la branche et une deuxième fois pour créer une patte d'appui 40 sensiblement parallèle à la surface extérieure de la seconde pièce pour venir élastiquement en contact avec celle-ci, avec une certaine pression de contact, occasionnée par la déformation élastique de la languette, que provoque le montage de la seconde pièce.

Concernant l'orientation des languettes, on constate que la languette 38 s'étend à partir de la base 13 de l'agrafe, tandis que la languette 39 s'étend à partir du bord avant de la branche d'agrafe inférieure 12.

Il est encore à noter que chaque branche inférieure comporte des moyens de dents destinés à percer une couché de revêtement sur la face extérieure de la seconde pièce, lorsqu'elle vient en contact avec l'agrafe lors de l'assemblage des deux pièces. La couche de revêtement est en général une couche de peinture.

Dans le cas du premier mode de réalisation, comme on le voit très clairement sur les figures 17 et 20, deux dents 42 sont découpées de la branche inférieure et repliées hors du plan de la branche en direction de la seconde pièce.

Dans le cas du second mode de réalisation, une dent 44 est réalisée par pliage de l'angle de l'extrémité avant relativement près des languettes de blocage.

En se reportant à nouveau aux figures 1 à 6, on décrira ci-après le procédé d'assemblage des deux pièces 2 et 3. Comme on le voit sur la figure 1 pour le premier mode de réalisation et la figure 5 pour le second mode de réalisation, dans une première étape on pré-assemble l'organe d'assemblage 5 et l'agrafe 10 pour constituer le dispositif d'assemblage 1 comme on le voit notamment sur les figures 7 et 14, par insertion de l'organe d'assemblage 5 dans les découpes 11 et 12 de l'agrafe 10. Après l'insertion, le bras de retenue 26 en venant en appui sur une des deux surfaces d'appui 28 de la tête 6 de l'organe d'assemblage assure le blocage axial de l'organe 5 dans l'agrafe 10. Puis, on pousse l'agrafe 10 sur le bord 2 de la première pièce. Le bord comporte à cette fin une découpe 44 de réception, dans le cas du premier mode de réalisation du fût 7 de l'organe d'assemblage et, dans le cas du second mode de réalisation, des languettes de blocage 22. La découpe 44 s'étend de l'avant 45 du bord 2 jusqu'à une profondeur appropriée. Puis on met en place la troisième pièce, à savoir le profilé 3 qui comporte à cette fin une rangée d'évidements appropriés 47. Dans le cas du premier mode de réalisation, ces évidements sont des trous de forme rectangulaire avec des extensions latérales 48 permettant le passage des excroissances 18 du pied 8 de l'organe d'assemblage 5.

Concernant le premier mode de réalisation, la largeur a des évidements 47 est inférieure à la longueur b du pied 8 dans le sens des excroissances 18, tandis dans le deuxième mode de réalisation, la longueur c des évidements est légèrement supérieure à l'écart d des languettes 22 au niveau de leur naissance.

Grâce à ces conditions de dimensionnement, le profilé 3 peut être verrouillé dans sa position d'assemblage à la première pièce 2, par rotation de l'organe d'assemblage d'un angle de sensiblement 90°.

Dans le cas du premier mode de réalisation, dans la position après rotation, les excroissances 18 viennent en prise derrière les bords de l'évidement 47 du profilé tandis que, dans le cas du second mode de réalisation, le pied en forme de came ovale en écartant les languettes 22 empêche tout dégagement du profilé de sa position verrouillée.

Il ressort de la description de l'invention, qui vient d'être faite en se référant aux figures, que l'organe d'assemblage 5 présente une forme relativement simple permettant la réalisation de cette pièce uniquement par forgeage, moulage ou surmoulage, tandis que l'agrafe 10 est relativement complexe, ce qui ne représente cependant aucun inconvénient puisque toutes les parties de l'agrafe sont obtenues par découpe d'une plaquette métallique et par pliage approprié. Grâce aux dents l'agrafe lorsqu'elle est en métal assure un contact électrique entre les deux pièces assemblées.

Par conséquent, le prix de revient relativement faible du dispositif d'assemblage selon l'invention est obtenu, contrairement aux systèmes connus, en rendant la forme de l'organe d'assemblage la plus simple possible et en réalisant les fonctions complexes que doit nécessairement accomplir le dispositif d'assemblage pour obtenir un résultat optimal, sur l'agrafe qui, elle, est facilement réalisable.

## Revendications

1. Système d'assemblage de deux pièces (2, 3), du type comprenant un organe d'assemblage (5) des deux pièces à l'état assemblé, rotatif entre une position de déverrouillage et une position de verrouillage et comportant une partie de tête, une partie de fût et une partie de pied (8) pourvue de moyens de verrouillage, une élément en forme d'une agrafe (10) présentant la forme d'un U ayant deux branches (11, 12) reliées par une partie de base, élastiquement écartables l'une de l'autre et pourvues de découpes (14, 15) permettant le passage dudit pied, l'organe d'assemblage et l'agrafe étant susceptibles d'être pré-assemblés et l'ensemble pré-assemblé étant monté sur le bord d'une des deux pièces par engagement du bord entre les deux branches de l'agrafe et la deuxième pièce comportant un évidemment permettant le passage du pied dans la position de déverrouillage de l'organe d'assemblage, mais empêchant le retrait de la seconde pièce lorsque l'organe d'assemblage (5) occupe sa position de verrouillage, le pied (8) de l'organe d'assemblage (5) présentant la forme d'une came et le verrouillage se faisant par rotation de l'organe d'un angle prédéterminé.

2. Système selon la revendication 1, **caractérisé en ce que** les branches supérieure (11) et inférieure (12) comportent des découpes (14-15) dans lesquelles l'organe d'assemblage (5) est susceptible d'être introduit par un déplacement axial.

3. Système selon l'une des revendications 1 ou 2, **caractérisé en ce que** la découpe (15) dans la branche inférieure (11) de l'agrafe (10) comporte au niveau de ses bords deux languettes (22) qui font saillie sensiblement perpendiculairement de la face inférieure de la branche et qui sont sensiblement parallèles à l'état de repos mais peuvent être élastiquement écartées de cette position, par pivotement au niveau de leurs extrémités de naissance et **en ce que** le pied (8) de l'organe d'assemblage (5) présente une forme oblongue de façon que la rotation de l'organe (5) provoque l'écartement des extrémités des languettes élastiques (22) .

4. Système selon l'une des revendications 1 ou 2, **caractérisé en ce que** le pied (8) comporte des excroissances latérales (18) destinées à venir en prise derrière le bord de l'évidement (47) de passage du pied, pratiqué dans la seconde pièce (3).

5. système selon l'une des revendications 1 à 4, **caractérisé en ce que** l'agrafe (10) comporte un bras (26) de retenue de l'organe d'assemblage (5) dans l'agrafe (10) après l'insertion de cet organe dans l'agrafe.

6. Système selon la revendication 5, **caractérisé en ce que** la tête (6) de l'organe d'assemblage (5) comporte une face (28) d'appui du bras de retenue (26), qui s'étend sensiblement perpendiculairement à l'axe de l'organe (5).

7. Système selon la revendications 6, **caractérisé en ce que** la tête (6) de l'organe d'assemblage (5) comporte des excroissances (33) latérales formant butée de limitation du mouvement rotatif de l'organe d'assemblage.

8. Système selon l'une des revendications 1 à 7, **caractérisé en ce que** l'organe d'assemblage est réalisé par forgeage, moulage ou surmoulage.

9. Système selon l'une des revendications 1 à 8, **caractérisé en ce que** l'agrafe (10) est obtenue à partir d'une plaque métallique plane, par découpe et pliage.

10. Système selon l'une des revendications 1 à 9, **caractérisé en ce que** l'angle de rotation de l'organe d'assemblage (5) est de l'ordre de 90°.

## Claims

1. A system for assembling two parts (2, 3), of the type comprising an assembly member (5) for two parts in the assembled state, rotating between an unlocking position and a locking position and comprising a head portion, a shaft portion and a foot portion (8) provided with locking means, a hook-shaped element (10) in U shape having two branches (11, 12) connected by a base portion, able to be elastically moved away from each other and provided with cutouts (14, 15) allowing the passage of said foot, the assembly member and the hook being able to be pre-assembled and the pre-assembled assembly being mounted on the edge of one of the two parts by engagement of the edge between the two branches of the hook and the second part comprising a recess allowing the passage of the foot in the unlocking position of the assembly member, but preventing the withdrawal of the second part when the assembly member (5) occupies its locking position, the foot (8) of the assembly member (5) being cam-shaped and the locking taking place by rotation of the member by a predetermined angle.

2. The system according to claim 1, **characterized in that** the upper (11) and lower (12) branches comprise cutouts (14-15) in which the assembly member (5) can be introduced by an axial movement.

3. The system according to one of claims 1 or 2, **characterized in that** the cutout (15) in the lower branch (11) of the hook (10) comprises, at its edges, two tongues (22) which protrude substantially perpendicular to the lower face of the branch and which are substantially parallel in the idle state but can be elastically moved away from this position, by pivoting at their origin ends, and **in that** the foot (8) of the assembly member (5) has an elongated shape such that the rotation of the member (5) causes the separation of the ends of the elastic tongues (22).

4. The system according to one of claims 1 or 2, **characterized in that** the foot (8) comprises lateral protuberances (18) designed to engage behind the edge of the recess (47) for passage of the foot, formed in the second part (3).

5. The system according to one of claims 1 to 4, **characterized in that** the hook (10) comprises an arm (26) for retaining the assembly member (5) in the hook (10) after insertion of this member into the hook.

6. The system according to claim 5, **characterized in that** the head (6) of the assembly member (5) comprises a support face (28) for the retaining arm (26), which extends substantially perpendicularly to the axis of the member (5).

7. The system according to claim 6, **characterized in that** the head (6) of the assembly member (5) comprises lateral protuberances (33) forming a stop limiting the rotational movement of the assembly member.

8. The system according to one of claims 1 to 7, **characterized in that** the assembly member is made by forging, molding or over molding.

9. The system according to one of claims 1 to 8, **characterized in that** the hook (10) is obtained from a flat metal plate, by cutting and bending.

10. The system according to one of claims 1 to 9, **characterized in that** the rotational angle of the assembly member (5) is in the order of 90°.

## Patentansprüche

1. System zur Verbindung zweier Teile (2, 3), in der Bauart, die ein Verbindungsorgan (5) der zwei Teile im verbundenen Zustand umfasst, drehend zwischen einer Entriegelungsstellung und einer Verriegelungsstellung und einen Kopfabschnitt, einen Schaftabschnitt und einen Fußabschnitt (8) aufweisend mit Verriegelungsmitteln, ein Element in Form einer Klammer (10), die die Form eines U aufweist mit zwei Bügeln (11, 12), die durch einen Basisabschnitt verbunden, elastisch voneinander spreizbar und mit Ausschnitten (14, 15) versehen sind, die den Durchgang des Fußes erlauben, wobei das Verbindungsorgan und die Klammer imstande sind, vorverbunden zu sein und die vorverbundene Gruppe auf dem Rand eines der zwei Teile durch Eingriff des Randes zwischen die zwei Bügel der Klammer montiert ist und das zweite Teil eine Aussparung umfasst, die den Durchgang des Fußes in der Entriegelungsstellung des Verbindungsorgans erlaubt, aber den Rückzug des zweiten Teils verhindert, wenn das Verbindungsorgan (5) seine Verriegelungsstellung einnimmt, wobei der Fuß (8) des Verbindungsorgans (5) die Form einer Kurvenscheibe aufweist und die Verriegelung durch Drehen des Organs in einem vorbestimmten Winkel erfolgt.

2. System nach Anspruch 1, **dadurch gekennzeichnet, dass** der obere (11) und untere (12) Bügel Ausschnitte (14-15) umfassen, in die das Verbindungsorgan (5) imstande ist, durch axiale Verschiebung eingeführt zu werden.

3. System nach einem der Ansprüche 1 oder 2, **dadurch gekennzeichnet, dass** der Ausschnitt (15) im unteren Bügel (11) der Klammer (10) auf Ebene seiner Ränder zwei Zungen (22) umfasst, die etwa rechtwinklig über die Unterseite des Bügels hervorstehen und die in Ruhestellung etwa parallel sind, aber aus dieser Stellung elastisch spreizbar sind durch Drehen auf Ebene ihrer Entstehungsenden und **dadurch**, dass der Fuß (8) des Verbindungsorgans (5) eine längliche Form aufweist, so dass die Drehung des Organs (5) die Spreizung der Enden der elastischen Zungen (22) hervorruft.

4. System nach einem der Ansprüche 1 oder 2, **dadurch gekennzeichnet, dass** der Fuß (8) seitliche Ausstülpungen (18) umfasst, die dazu bestimmt sind, hinter dem Rand der Fußdurchgangsaussparung (47), die in das zweite Teil (3) eingearbeitet ist, in Eingriff zu kommen.

5. System nach einem der Ansprüche 1 bis 4, **dadurch gekennzeichnet, dass** die Klammer (10) einen Arm (26) zum Zurückhalten des Verbindungsorgans (5) in der Klammer (10) nach Einfügen dieses Organs in die Klammer umfasst.

6. System nach Anspruch 5, **dadurch gekennzeichnet, dass** der Kopf (6) des Verbindungsorgans (5) eine Abstützseite (28) des Rückhaltearms (26) aufweist, der sich etwa senkrecht zur Achse des Organs (5) erstreckt.

7. System nach Anspruch 6, **dadurch gekennzeichnet, dass** der Kopf (6) des Verbindungsorgans (5) seitliche Ausstülpungen (33) umfasst, die für die Drehbewegung des Verbindungsorgans Begrenzungsänschlage bilden.

8. System nach einem der Ansprüche 1 bis 7, **dadurch gekennzeichnet, dass** das Verbindungsorgan durch Schmieden, Formen oder Überformen hergestellt ist.

9. System nach einem der Ansprüche 1 bis 8, **dadurch gekennzeichnet, dass** die Klammer (10) aus einer flachen Metallplatte durch Ausschneiden und Biegen hergestellt ist.

10. System nach einem der Ansprüche 1 bis 9, **dadurch gekennzeichnet, dass** der Drehwinkel des Verbindungsorgans (5) in der Größenordnung von 90° ist.
